# EUROPEAN PATENT SPECIFICATION

(11) **EP 3 141 430 B1**
(45) Date of publication and mention of the grant of the patent: **01.05.2019**
(21) Application number: 15872006.0
(22) Date of filing: 19.11.2015
(51) Int. Cl.: B60R 1/074, F16C 17/04

(54) **SYSTEM FOR THE ROTATION OF A REAR VIEW MIRROR FRAME**
SYSTEM ZUR DREHUNG EINES RÜCKSPIEGELRAHMENS
SYSTÈME DE ROTATION D'ARMATURE DE MIROIR RÉTROVISEUR

(30) Priority: 22.12.2014 ES 201401033
(43) Date of publication of application: 15.03.2017
(73) Proprietor: Compañía Levantina de Reductores S.L., 03440 Ibi (Alicante) (ES)
(72) Inventor: MARTIN PINA, Vicente, E-03440 Ibi (Alicante) (ES); PICÓ ANTOLÍ, Arturo, E-03440 Ibi (Alicante) (ES)
(74) Representative: Garcia-Cabrerizo y del Santo, Pedro Maria
(86) International application number: PCT/ES2015/070830
(87) International publication number: WO 2016/102724

(56) References cited:
- EP-A1- 0 482 558
- EP-A2- 1 775 163
- EP-A2- 1 775 163
- WO-A1-03/037680
- DE-A1- 3 213 418
- JP-A- 2006 264 597
- JP-A- 2006 312 343
- US-A1- 2007 295 134

## Description

### Technical Field of Invention

The present invention falls within the field of rear-view mirror rotation systems and, more specifically, the rear-view mirrors that are mounted on the sides of vehicles.

### Background of the invention

Embodiments of folding mechanisms for exterior rear-view mirrors of motor vehicles equipped with movement means for a mirror casing with respect to a support frame attached to the structure of a vehicle are known. Generally speaking, these movement means rely on detachable housed products fixed to the mirror casing which, essentially, consist of an electric motor and one or more gears that have been adapted to drive a rotation crown wheel connected to a supporting plate.

ES 2217986 discloses a collapsing mechanism for a vehicle external rear-view mirrors which consists of a housing, integral to a mirror casing, and a driven crown wheel that operates as the axis of rotation of said casing with respect to a support-chassis fixed to the vehicle, the crown being provided with first position-fixing means capable of coupling said crown wheel to the support-chassis and second means of position-fixing which, in cooperation with a stop element, integral with the housing and loaded by an elastic member, limit the rotation of said casing around the crown wheel and according to a direction of rotation, all of this being the stop element and the elastic member integrated in one piece with elastic properties.

However, ES 2217986 does not solve some of the problems that remain unresolved in the state of the art, such as the durability of the rear-view mirrors rotation systems and the noise during the operation of said systems, that is, during the maneuvers of unfolding and refolding the mirror.

EP1775163A2 is considered the closest prior art, as it discloses a rear-view mirror rotation system according to the preamble of claim 1.

From DE3213418A1 an anti-rebound mechanism is known, which comprises several washers and a spring between them.

### Description of the invention

The invention relates to a system for the rotation of a rear-view mirror frame, as defined in claim 1. The dependent claims define additional characteristics of the invention. The characteristics defined in the set of claims are associated with technical effects that solve the problems that until now remained unresolved in the state of the art.

This invention increases the durability and service life of rear-view mirrors, improving the performance of the rotation system and providing a guarantee of improved long term functionality. By increasing the service life of the rotation system, noise resulting from the deterioration of system components is also reduced; effectively, the configuration of the components of the mechanism is kept closer to the initial specifications of the system, since the apparition of gaps or misalignments between the components of the system takes longer: while the minimum cycles in the current systems are 15,000, The system of the invention exceeds 50,000 (one cycle is equivalent to opening and closing) Furthermore, operation from the beginning of the service life of the system is more refined in the system of the invention than in that of known systems.

### Brief Description of the Drawings

In order to gain a better understanding of what is described in the present specification, a series of drawings has been included in which, by way of example, the various characteristics of the invention are represented.
Figure 1 is a side section of the system of the invention.
Figure 2 is a plan section of the system of the invention.

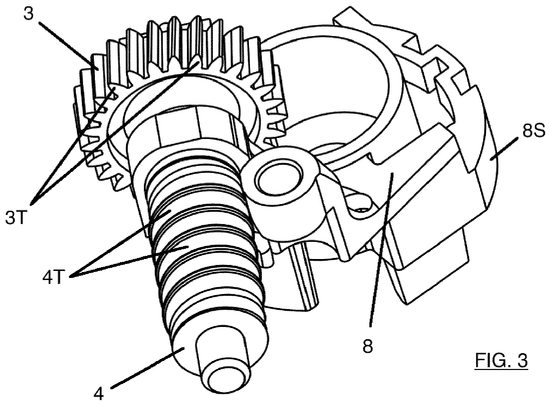

Figure 3 is a perspective view of the supporting plate, with the motor crown wheel and the drive worm.
Figure 4 is a plan section displaying the supporting plate placed in the casing.
Figure 5 is a plan view of the supporting plate of the invention.
Figures 6A, 6B and 6C display different perspectives of the casing of the invention.

### References:

Drive motor (1)
First washer (11)
Second washer (12)
Spring (13)
Motor worm (2)
Motor thread (2T)
Motor crown wheel (3)
Motor toothing (3T)
Drive worm (4)
Drive thread (4T)
Second antifriction sleeve (4B) of the drive worm (4)
Drive shaft (34)
Drive crown wheel (5)
Drive toothing (5T)
First antifriction sleeve (5B) of the drive crown wheel (5)
Casing (6)
Indentations (6R', 6R", 6R"', 6R"") of the casing (6)
Rails (6C', 6C", 6C"') of the casing (6)
Positioner (6P)
Seal (7)
Supporting plate (8)
Contact surface (8S) of the supporting plate (8)
Angular extensions (8A, 8B) of the supporting plate (8)
Projections (8P', 8P", 8P"', 8P"") of the supporting plate (8)
Plate thickness (8T)
Support thickness (8E)
Guides (8G', 8G", 8G"') of the supporting plate (8)
Housing (8H)
Seat (8C)

### Description of a preferred embodiment:

An embodiment of the invention refers to a rear-view mirror frame rotation system. The rear-view mirror frame includes the elements necessary for protecting and externally maneuvering the rear-view mirror outside of a vehicle. The following denomination of the elements that make up the transmission is used in the specification by means of two worms and two crown wheels: a motor worm (2), a motor crown wheel (3) engaged with the motor worm (2); a drive worm (4), and a drive crown wheel (5) engaged with the drive worm (4).
The rear-view mirror frame rotation system consists of:
1a) A drive motor (1);
1b) A motor worm (2), in a motor output shaft (1);
1c) A motor crown wheel (3), engaged with the motor worm (2);
1d) A drive worm (4), coaxial with the motor crown wheel (3);
1e) A drive crown wheel (5), engaged with the drive worm (4), designed so that the rear-view mirror frame can be maneuvered between a retracted position and a deployed position.

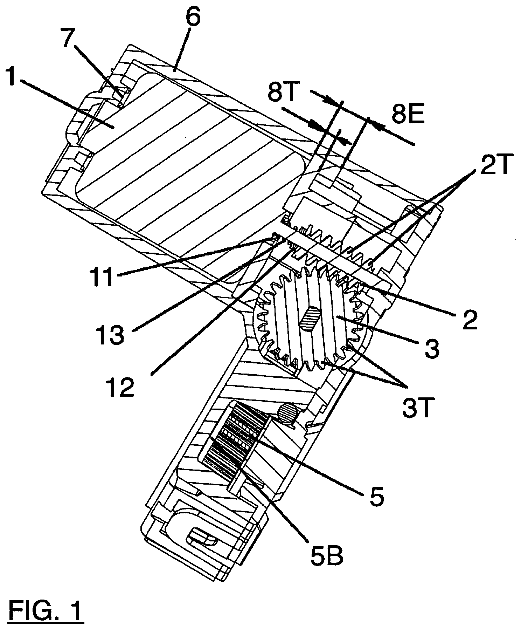

In Figure 1 can be seen that the rear-view mirror frame rotation system comprises:
1f) An anti-rebound mechanism between the motor (1) and the motor worm (2); comprising:
1f1) A first washer (11) supported by the motor (1);
1f2) A second washer (12) supported by the motor worm (2);
1f3) A spring (13), between the first washer (11) and the second washer (12);
   1f3a) A configuration for cushioning the axial thrust between the motor worm (2) and the motor crown wheel (3).

The technical effects of the anti-rebound mechanism are:
- a reduction in noise during operation of the rotation system when the motor is inverted to change the rotation direction;
- a decrease in mechanical wear of engaged parts connected with the motor (1), namely the motor worm (2) and motor crown wheel (3), as the tangential force is cushioned in the motor thread (2T) and the motor toothing (3T); and
- an increase in service life of said parts, as the anti-rebound mechanism allows to reduce the axial load relative to the motor shaft (1); significant axial loads can reduce the service life of involved parts.

According to other characteristics of the invention, the rear-view mirror frame rotation system comprises:
1g) A casing (6), configured to house the motor (1);
1h) A seal (7), configured to cushion a seat of the motor (1) in the casing (6).

The seal (7) works by absorbing motor (1) length deviations, that is, the tolerance of each dimension of the motor (1) length is offset, preventing knocks between the motor (1) and the casing (6) throughout operation of the motor (1), reducing noise when the rotation system is working, and increasing the service life of the motor (1), the motor worm (2) and the motor crown wheel (3) as the motor (1) is securely attached to the casing (6).

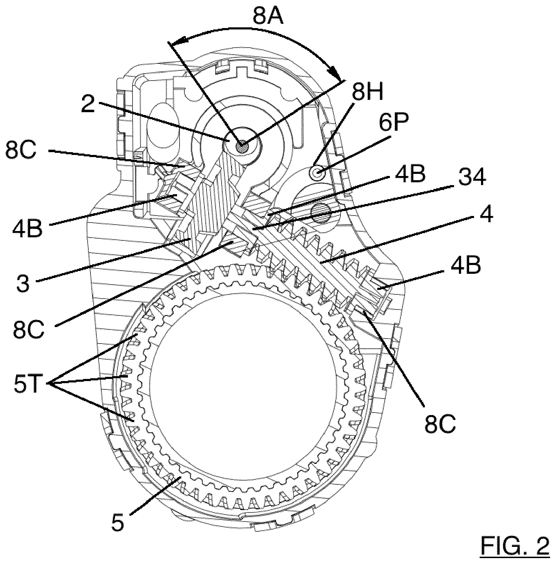

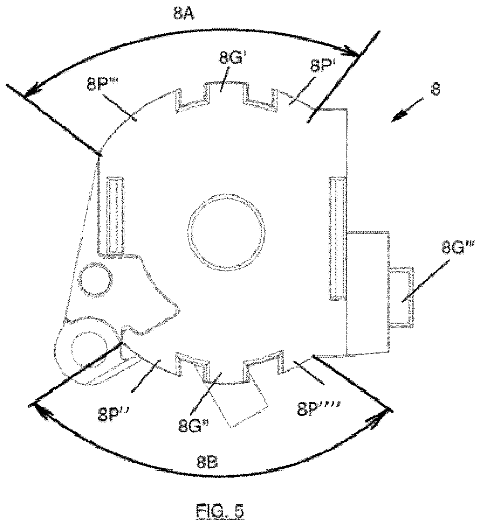

According to other characteristics of the invention, the rear-view mirror frame rotation system may comprise:
2a) a supporting plate (8):
configured to:
2a1) Support the motor crown wheel (3) and the drive worm (4);
2a2) Position the motor crown wheel (3) and the drive worm (4) relative to the motor (1);
2a3) Bear on the casing (6) in order to position the motor crown wheel (3) and the drive worm (4), and guide the motor (1) in the casing (6);
2a4) Having a contact surface (8S) with the casing (6), where the contact surface (8S) has two angular extensions (8A, 8B) greater that 75°. Figure 2 shows the first angular extension (8A) which defines the arc for the first contact surface of the plate (8) with the casing (6). In an embodiment of the invention shown in Figure 5, the first angular extension (8A) could be 93.1° and the second angular extension (8B) 78.5°. In total, both areas, can comprise 47.6% of the total surface of the cylinder.

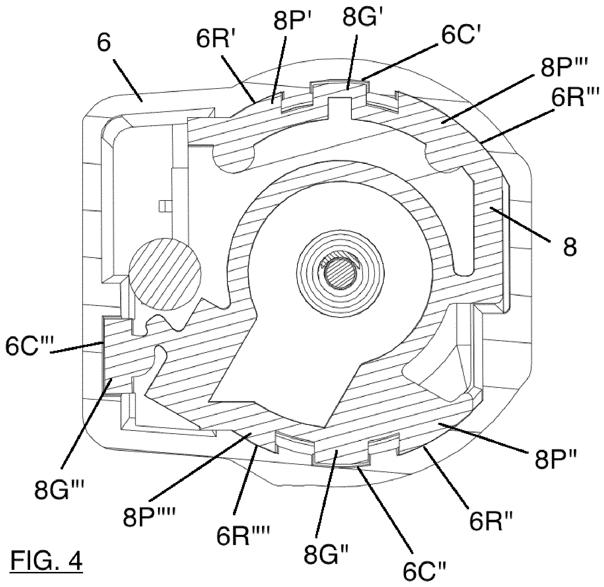

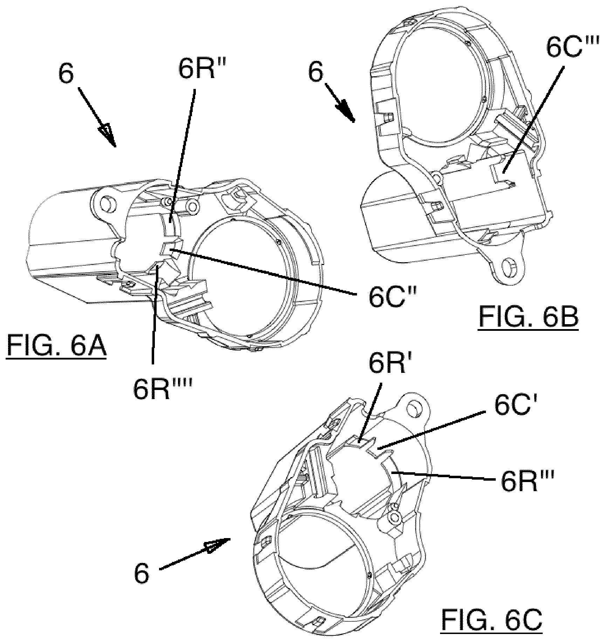

According to other characteristics of the invention, the rear-view mirror frame rotation system may comprise:
3a) A supporting plate (8):
configured to:
3a1) Support the motor crown wheel (3) and the drive worm (4);
3a2) Position the motor crown wheel (3) and the drive worm (4);
3a3) Bear on the casing (6) in order to position the motor crown wheel (3) and the drive worm (4), and guide the motor (1) in the casing (6);
where:
3b) The casing (6) comprises a plurality of indentations (6R', 6R", 6R"', 6R"") facing the plate (8);
3c) The supporting plate (8) comprises a plurality of projections (8P', 8P", 8P"', 8P"") configured to fit into the indentations (6R', 6R", 6R"', 6R""). Figure 4 shows the supporting plate (8) placed in the casing (6).
   In figure 4 the casing (6) indentations (6R', 6R", 6R"', 6R"") and supporting plate (8) projections (8P', 8P", 8P"', 8P"") can be seen fitted into the indentations (6R', 6R", 6R"', 6R""). In the embodiment shown in Figure 4 there are four pairs of indentations (6R', 6R", 6R"', 6R"")-projections (8P', 8P", 8P'", 8P""). In the embodiment according to Figure 4, it is shown that the four pairs of indentations (6R', 6R", 6R"', 6R"")-projections (8P', 8P", 8P"', 8P"") can be grouped into two sets. A first set groups the first pair of indentations (6R')-projections (8P') and the second pair of indentations (6R")-projections (8P"). A second set groups the third pair of indentations (6R"')-projections (8P'") and the fourth pair of indentations (6R"")-projections (8P""). In Figure 4 can be seen that the first pair of indentations (6R')-projections (8P') is located approximately diametrically opposed to the second pair of indentations (6R")-projections (8P"). In Figure 4 can also be seen that the third pair of indentations (6R"')-projections (8P"') is located approximately diametrically opposed to the fourth pair of indentations (6R"")-projections (8P"").
   In Figure 4 can be seen that the distribution of the four pairs of indentations (6R', 6R", 6R"', 6R"")-projections (8P', 8P", 8P"', 8P"") is grouped, in turn, into two arcs diametrically opposed of the plate (8). A first arc comprises the first pair of indentations (6R')-projections (8P') and the third pair of indentations (6R"')-projections (8P'"). A second arc comprises the second pair of indentations (6R")-projections (8P") and the fourth pair of indentations (6R"")-projections (8P"").
   The sum of the arcs corresponding to the contact of the supporting plate (8)-the casing (6) which takes place in the pairs of indentations (6R', 6R", 6R"', 6R"")-projections (8P', 8P", 8P"', 8P"") is greater than 75°. According to a preferred embodiment of the invention, the angle corresponding to the contact of the supporting plate (8)-the casing (6) is greater than 170°. Figure 5 shows the supporting plate (8) where the projections (8P', 8P", 8P'", 8P"") can be noticed. Figures 6A, 6B and 6C show the casing (6) where the indentations (6R', 6R", 6R"', 6R"") can be noticed.

According to other characteristics of the invention, the rear-view mirror frame rotation system may comprise:
4a) A supporting plate (8) having a plate thickness (8T):
configured to:
4a1) Support the motor crown wheel (3) and the drive worm (4);
4a2) Position the motor crown wheel (3) and the drive worm (4) relative to the motor (1);
4a3) Bear on the casing (6) in order to position the motor crown wheel (3), the drive worm (4), and guide the motor (1) in the casing (6);
4a4) Having a contact surface (8S) with the casing (6), where the contact surface (8S) has a support thickness (8E) greater than twice the thickness of the plate (8T).

According to other characteristics of the invention, the rear-view mirror frame rotation system may comprise:
5a) A supporting plate (8):
configured to:
5a1) Support the motor crown wheel (3) and the drive worm (4);
5a2) Position the motor crown wheel (3) and the drive worm (4) relative to the motor (1);
5a3) Bear on the casing (6) in order to position the motor crown wheel (3), the drive worm (4) and the motor (1) in the casing (6);
where:
5b) The casing (6) comprises a plurality of rails (6C', 6C", 6C'") parallel to a motor shaft (1);
5c) The supporting plate (8) comprises a plurality of guides (8G', 8G", 8G'") designed to fit into the rails (6C', 6C", 6C'").
   Figure 4 shows the supporting plate (8) placed in the casing (6). The supporting plate (8) allows a guided insertion of the motor crown wheel (3), the drive worm (4) and, notably, the motor (1) into the casing (6).
   In Figure 4 can be seen the casing (6) rails (6C', 6C", 6C'") and the supporting plate (8) guides (8G', 8G", 8G'") fitted in the rails (6C', 6C", 6C"'). In the embodiment shown in Figure 4 can be seen three pairs of rails (6C', 6C", 6C"')-guides (8G', 8G", 8G'"). In the embodiment according to Figure 4, it is shown that the three pairs of rails (6C', 6C", 6C"')-guides (8G', 8G", 8G"') can be grouped into two sets. A first set groups two pairs of rails (6C', 6C")-guides (8G', 8G"). A second set groups the third pair of rails (6C'")-guides (8G'"). In Figure 4 can be seen that a first pair of rails (6C')-guides (8G') of the first set is located approximately diametrically opposed to the second pair of rails (6C")-guides (8G") of the second set.
   In Figure 4 can be seen that the distribution of the three pairs of rails (6C', 6C", 6C"')-guides (8G', 8G", 8G"') is such that the main contact surface of the supporting plate (8)-the casing (6) in the third pair of rails (6C"')-guide (8G'") forms a 90° angle with the main contact surface of the supporting plate (8)-the casing (6) of the first pair of rails (6C')-guide (8G'), and with the main contact surface of the supporting plate (8)-the casing (6) of the second pair of rails (6C")-guide (8G"). Figure 5 shows the supporting plate (8) where the guides (8G', 8G", 8G'") can be noticed. Figures 6A, 6B and 6C show the casing (6) where the rails (6C', 6C", 6C'") can be noticed.

According to other characteristics of the invention, the rear-view mirror frame rotation system may comprise:
6a) A supporting plate (8):
configured to:
6a1) Support the motor crown wheel (3) and the drive worm (4);
6a2) Position the motor crown wheel (3) and the drive worm (4) relative to the motor (1);
6a3) Bear on the casing (6) in order to position the motor crown wheel (3), the drive worm (4) and the motor (1) in the casing (6);
where:
6b) The casing (6) comprises a positioner (6P) facing the plate (8);
6c) The supporting plate (8) comprises a housing (8H) for receiving the positioner (6P)

The invention may also comprise all or a combination of the aforementioned characteristics. The technical effect of the supporting plate (8) angular extensions (8A, 8B), the casing (6) indentations (6R), the supporting plate (8) projections (8P), the support thickness (8E), the casing (6) rails (6C', 6C", 6C'"), the supporting plate (8) guides (8G', 8G", 8G'"), the positioner (6P) and the housing (8H) is as follows:
- Reduced rocking and vibrations of the set formed by the supporting plate (8), the motor (1), the motor crown wheel (3) and the drive worm (4);
- The plate (8) is securely attached to the casing (6) in order to control the clearance in the various gears. This clearance is an important factor for the correct operation of gears. All gears must have sufficient clearance in order to absorb concentricity tolerance and maintain the shape of the teeth; insufficient clearance results in breakdowns due to overloading and excessive clearance may lead to deterioration as there is a reduction of the surface where the whole contact force between the teeth-threads (2T, 4T) and toothings (3T, 5T) during engagement is exerted.

The technical effects of the features described so far result in an improvement in the operation of all the components of the system, ensuring that the transmission occurs without blows between the worms and the crown wheels. The first washer (11), second washer (12), spring (13) and seal (7) work together in motor worm (2) axial direction. These components cushion the axial thrust between the motor worm (2) and the motor crown wheel (3). The plate (8) and the casing (6) interact by means of the following elements: the support thickness (8E), the angular extensions (8A, 8B) of the supporting plate (8), the casing (6) indentations (6R', 6R", 6R"', 6R""), the casing (6) rails (6C', 6C", 6C'"), the supporting plate (8) projections (8P', 8P", 8P"', 8P""), the supporting plate (8) guides (8G', 8G", 8G'").

According other characteristics of the invention, the drive crown wheel (5) may be made of metal.

The technical effect of the metal crown wheel is an increased service life of the rotation system. According to other characteristics of the invention, the drive crown wheel (5) may comprise an antifriction sleeve (5B).

The technical effect of the initial antifriction sleeve (5B) is an easier rotation of the drive crown (5), eliminating frictions with respect to elements that remain fixed. According to other characteristics of the invention, the rear-view mirror frame rotation system may comprise:
9a) A supporting plate (8):
configured to:
9a1) Support the motor crown wheel (3) and the drive worm (4);
9a2) Position the motor crown wheel (3) and the drive worm (4) relative to the motor (1);
9a3) Bear on the casing (6) in order to position the motor crown wheel (3), the drive worm (4) and the motor (1) in the casing (6);
where:
9b) The motor crown wheel (3) is inserted into a drive shaft (34) of the drive worm (4);
9c) An element selected from the supporting plate (8), the casing (6) and combinations thereof, comprises a seat (8C) designed to receive the drive shaft (34).
10d) The drive shaft (34) comprises a second antifriction sleeve (4B) in the seat (8C).

The drive shaft (34) may also comprise two additional second anti-friction sleeves (4B) in the housing of the supporting plate and the casing. The technical effect of the first antifriction sleeve (5B) is provide an easier drive crown (5) rotation, by eliminating frictions with respect to elements that remain fixed.

According to other characteristics of the invention, the motor (1) may be enclosed so that the motor shaft only emerges from the enclosure in and end comprising the motor worm (2).

The technical effect of the motor (1) enclosure is, mainly, the regulation of the axial load. The motor (1) enclosure comprises a metal sheet at the back of the motor (1) which controls the axial movement of the motor (1).

According to other characteristics of the invention:
- The motor worm (2) may have a trapezoidal motor thread (2T).
- The motor crown wheel (3) may have an enveloping motor toothing (3T).
- The drive worm (4) may have a trapezoidal drive thread (4T).
- The drive crown wheel (5) may have an evolving drive perforation (3T).

The technical effect of the shape of the profiles of the worms and crown wheels is that the degree of coating of the gears is greater, increasing the performance of the system, making the operation smoother, decreasing the blows during movement and therefore the noise. As the degree of coating is greater, efforts are also spread during transmission, so the wear of the worms and crown wheels decreases, thus lengthening the service life of said parts and consequently the system, since these are the critical parts of the system, those that suffer greater wear and transmit greater efforts during the operation of the system.

## Claims

1. Rear-view mirror frame rotation system, having:
1a) A drive motor (1);
1b) A motor worm (2), in a motor output shaft (1);
1c) A motor crown wheel (3), engaged with the motor worm (2);
1d) A drive worm (4), coaxial with the motor crown wheel (3);
1e) A drive crown wheel (5), engaged with the drive worm (4), configured so that the rear-view mirror frame can be maneuvered between a retracted position and a deployed position
**characterised in that** it comprises:
1f) An anti-rebound mechanism between the motor (1) and the motor worm (2); consisting of:
1f1) A first washer (11) supported by the motor (1);
1f2) A second washer (12) supported by the motor worm (2);
1f3) A spring (13), between the first washer (11) and the second washer (12);
1f3a) configured to smooth the axial thrust between the motor worm (2) and the motor crown wheel (3).
and that also comprises
1g) A casing (6) configured to house the motor (1);
1h) A seal (7) configured to cushion a seat of the motor (1) in the casing (6).
it further comprises:
1i) A supporting plate (8):
configured to:
1i1) Support the motor crown wheel (3) and the drive worm (4);
1i2) Position the motor crown wheel (3) and the drive worm (4) relative to the motor (1);
1i3) Bear on the casing (6) in order to position the motor crown wheel (3), the drive worm (4) and the motor (1) in the casing (6);
1i4) Having a contact surface (8S) with the casing (6), where the contact surface (8S) has two angular extensions (8A, 8B) greater that 75°.

2. Rear-view mirror frame rotation system, according to claim 1
**characterised in that** it comprises:
2a) A supporting plate (8):
configured to:
2a1) Support the motor crown wheel (3) and the drive worm (4);
2a2) Position the motor crown wheel (3) and the drive worm (4) relative to the motor (1);
2a3) Bear on the casing (6) in order to position the motor crown wheel (3), the drive worm (4) and the motor (1) in the casing (6);
where:
2b) The casing (6) comprises a plurality of indentations (6R', 6R", 6R"', 6R"") facing the plate (8);
2c) The supporting plate (8) comprises a plurality of projections (8P', 8P", 8P"', 8P"") designed to fit into the indentations (6R', 6R", 6R"', 6R"").

3. Rear-view mirror frame rotation system, according to claim 1
**characterised in that** the rotation system comprises:
3a) A supporting plate (8) having a plate thickness (8T):
configured to:
3a1) Support the motor crown wheel (3) and the drive worm (4);
3a2) Position the motor crown wheel (3) and the drive worm (4) relative to the motor (1);
3a3) Bear on the casing (6) in order to position the motor crown wheel (3), the drive worm (4) and the motor (1) in the casing (6);
3a4) Having a contact surface (8S) with the casing (6), where the contact surface (8S) has a support thickness (8E) greater than twice the thickness of the plate (8T).

4. Rear-view mirror frame rotation system, according to claim 1
**characterised in that** it comprises:
4a) A supporting plate (8):
configured to:
4a1) Support the motor crown wheel (3) and the drive worm (4);
4a2) Position the motor crown wheel (3) and the drive worm (4) relative to the motor (1);
4a3) Bear on the casing (6) in order to position the motor crown wheel (3), the drive worm (4) and the motor (1) in the casing (6);
where:
4b) The casing (6) comprises a plurality of rails (6C', 6C", 6C'") parallel to a motor shaft (1);
4c) The Supporting plate (8) comprises a plurality of guides (8G', 8G", 8G'") designed to fit into the rails (6C', 6C", 6C'").

5. Rear-view mirror frame rotation system, according to claim 1 **characterised in that** it comprises:
5a) A supporting plate (8):
configured to:
5a1) Support the motor crown wheel (3) and the drive worm (4);
5a2) Position the motor crown wheel (3) and the drive worm (4) relative to the motor (1);
5a3) Bear on the casing (6) in order to position the motor crown wheel (3), the drive worm (4) and the motor (1) in the casing (6);
where:
5b) The casing (6) comprises a positioner (6P) facing the plate (8);
5c) The supporting plate (8) comprises a housing (8H) for receiving the positioner (6P).

6. Rear-view mirror frame rotation system, according to claim 1
**characterised in that:**
the drive crown (5) is made of metal.

7. Rear-view mirror frame rotation system, according to claim 1
**characterised in that:**
The drive crown (5) comprises a first antifriction sleeve (5B).

8. Rear-view mirror frame rotation system, according to claim 1
**characterised in that** it comprises:
8a) A supporting plate (8):
configured to:
8a1) Support the motor crown wheel (3) and the drive worm (4);
8a2) Position the motor crown wheel (3) and the drive worm (4) relative to the motor (1);
8a3) Bear on the casing (6) in order to position the motor crown wheel (3), the drive worm (4) and the motor (1) in the casing (6);
where:
8b) The motor crown wheel (3) is inserted into a drive shaft (34) of the drive worm (4);
8c) A element selected from the supporting plate (8), the casing (6) and combinations thereof, comprises a seat (8C) designed to receive the drive shaft (34).

9. Rear-view mirror frame rotation system, according to claim 1
**characterised in that:**
The motor (1) is enclosed such that the motor shaft only emerges from the enclosure in and end comprising the motor worm (2).

10. Rear-view mirror frame rotation system, according to claim 1
**characterised in that:**
The motor worm (2) has a trapezoidal motor thread (2T).

11. Rear-view mirror frame rotation system, according to claim 1
**characterised in that:**
The motor crown wheel (3) has an enveloping motor toothing (3T).

12. Rear-view mirror frame rotation system, according to claim 1
**characterised in that:**
The drive worm (4) has a trapezoidal motor thread (4T).

13. Rear-view mirror frame rotation system, according to claim 1
**characterised in that:**
The drive crown wheel (5) has an enveloping drive toothing (5T).

## Patentansprüche

1. Rückspiegelrahmen-Rotationssystem mit:
1a) einen Antriebsmotor (1);
1b) eine Motorschnecke (2) in einer Motorausgangswelle (1);
1c) ein Motorkronenrad (3), das mit der Motorschnecke (2) in Eingriff steht;
1d) eine Antriebsschnecke (4), die koaxial mit dem Motorkronenrad (3) ist;
1e) Ein Antriebskronenrad (5), das mit der Antriebsschnecke (4) in Eingriff steht und so konfiguriert ist, dass der Rückspiegelrahmen zwischen einer eingefahrenen Position und einer ausgefahrenen Position manövriert werden kann
**dadurch gekennzeichnet, dass** es umfasst:
1f) einen Rückstellmechanismus zwischen dem Motor (1) und der Motorschnecke (2); bestehend aus:
1f1) eine erste Scheibe (11), die von dem Motor (1) getragen wird;
1f2) eine zweite Scheibe (12), die von der Motorschnecke (2) getragen wird;
1f3) eine Feder (13) zwischen der ersten Scheibe (11) und der zweiten Scheibe (12);
1f3a) konfiguriert, um den axialen Schub zwischen der Motorschnecke (2) und dem Motorkronenrad (3) zu glätten.
und das umfasst auch:
1g) ein Gehäuse (6), das zum Unterbringen des Motors (1) konfiguriert ist;
1h) Eine Dichtung (7), die konfiguriert ist, um einen Sitz des Motors (1) im Gehäuse (6) abzufedern.
es umfasst weiter
1i) eine Stützplatte (8):
konfiguriert:
1i1) zur Unterstützung des Motorkronenrades (3) und der Antriebsschnecke (4);
1i2) des Motorkronenrades (3) und der Antriebsschnecke (4) relativ zum Motor (1) zu positionieren;
1i3) am Gehäuse (6) abzustützen, um das Motorkronenrad (3), die Antriebsschnecke (4) und den Motor (1) im Gehäuse (6) zu positionieren;
1i4) eine Kontaktfläche (8S) mit dem Gehäuse (6) aufweist, wobei die Kontaktfläche (8S) zwei Winkelverlängerungen (8A, 8B) aufweist, die größer als 75° sind.

2. Rückspiegelrahmen-Rotationssystem nach Anspruch 1
**dadurch gekennzeichnet, dass** es umfasst:
2a) eine Stützplatte (8):
konfiguriert:
2a1) zur Unterstützung des Motorkronenrades (3) und der Antriebsschnecke (4);
2a2) des Motorkronenrades (3) und der Antriebsschnecke (4) relativ zum Motor (1) zu positionieren;
2a3) am Gehäuse (6) abzustützen, um das Motorkronenrad (3), die Antriebsschnecke (4) und den Motor (1) im Gehäuse (6) zu positionieren;
wobei:
2b) Das Gehäuse (6) umfasst eine Vielzahl von Vertiefungen (6R', 6R", 6R"', 6R""), die der Platte (8) zugewandt sind;
2c) Die Stützplatte (8) umfasst mehrere Vorsprünge (8P', 8P", 8P"', 8P""), die so gestaltet sind, dass sie in die Vertiefungen (6R', 6R", 6R"', 6R"") passen.

3. Rückspiegelrahmen-Rotationssystem nach Anspruch 1
**dadurch gekennzeichnet, dass** das Rotationssystem umfasst:
3a) eine Stützplatte (8) mit einer Plattendicke (8T):
konfiguriert:
3a1) zur Unterstützung des Motorkronenrades (3) und der Antriebsschnecke (4);
3a2) des Motorkronenrades (3) und der Antriebsschnecke (4) relativ zum Motor (1) zu positionieren;
3a3) am Gehäuse (6) abzustützen, um das Motorkronenrad (3), die Antriebsschnecke (4) und den Motor (1) im Gehäuse (6) zu positionieren;
3a4) mit einer Kontaktfläche (8S) mit dem Gehäuse (6), wobei die Kontaktfläche (8S) eine Stützdicke (8E) hat, die größer ist als die doppelte Dicke der Platte (8T).

4. Rückspiegelrahmen-Rotationssystem nach Anspruch 1
**dadurch gekennzeichnet, dass** es umfasst:
4a) eine Stützplatte (8):
konfiguriert:
4a1) zur Unterstützung des Motorkronenrades (3) und der Antriebsschnecke (4);
4a2) des Motorkronenrades (3) und der Antriebsschnecke (4) relativ zum Motor (1) zu positionieren;
4a3) am Gehäuse (6) abzustützen, um das Motorkronenrad (3), die Antriebsschnecke (4) und den Motor (1) im Gehäuse (6) zu positionieren;
wobei:
4b) Das Gehäuse (6) umfasst mehrere Schienen (6C', 6C", 6C"") parallel zu einer Motorwelle (1);
4c) Die Stützplatte (8) umfasst eine Vielzahl von Führungen (8G', 8G", 8G'")), die so gestaltet sind, dass sie in die Schienen (6C', 6C", 6C'") passen.

5. Rückspiegelrahmen-Rotationssystem nach Anspruch 1
**dadurch gekennzeichnet, dass** es umfasst:
5a) eine Stützplatte (8):
konfiguriert:
5a1) zur Unterstützung des Motorkronenrades (3) und der Antriebsschnecke (4);
5a2) des Motorkronenrades (3) und der Antriebsschnecke (4) relativ zum Motor (1) zu positionieren;
5a3) am Gehäuse (6) abzustützen, um das Motorkronenrad (3), die Antriebsschnecke (4) und den Motor (1) im Gehäuse (6) zu positionieren;
wobei:
5b) das Gehäuse (6) umfasst einen Positionierer (6P), der der Platte (8) zugewandt ist;
5c) Die Stützplatte (8) umfasst ein Gehäuse (8H) zur Aufnahme des Positionierers (6P).

6. Rückspiegelrahmen-Rotationssystem nach Anspruch 1
**dadurch gekennzeichnet, dass**
die Antriebskrone (5) besteht aus Metall.

7. Rückspiegelrahmen-Rotationssystem nach Anspruch 1
**dadurch gekennzeichnet, dass**
die Antriebskrone (5) umfasst eine erste Antifriktionshülse (5B).

8. Rückspiegelrahmen-Rotationssystem nach Anspruch 1
**dadurch gekennzeichnet, dass** es umfasst:
8a) eine Stützplatte (8):
konfiguriert:
8a1) zur Unterstützung des Motorkronenrades (3) und der Antriebsschnecke (4);
8a2) des Motorkronenrades (3) und der Antriebsschnecke (4) relativ zum Motor (1) zu positionieren;
8a3) am Gehäuse (6) abzustützen, um das Motorkronenrad (3), die Antriebsschnecke (4) und den Motor (1) im Gehäuse (6) zu positionieren;
wobei:
8b) das Motorkronenrad (3) ist in eine Antriebswelle (34) der Antriebsschnecke (4) eingesetzt;
8c) Ein aus der Stützplatte (8), dem Gehäuse (6) und Kombinationen davon ausgewähltes Element umfasst einen Sitz (8C), der zur Aufnahme der Antriebswelle (34) ausgebildet ist.

9. Rückspiegelrahmen-Rotationssystem nach Anspruch 1
**dadurch gekennzeichnet, dass**
der Motor (1) ist derart eingeschlossen, dass die Motorwelle nur aus dem Gehäuse austritt und ein Ende aufweist, das die Motorschnecke (2) umfasst.

10. Rückspiegelrahmen-Rotationssystem nach Anspruch 1
**dadurch gekennzeichnet, dass**
die Motorschnecke (2) hat ein trapezförmiges Motorgewinde (2T).

11. Rückspiegelrahmen-Rotationssystem nach Anspruch 1
**dadurch gekennzeichnet, dass**
das Motorkronenrad (3) hat eine umhüllende Motorverzahnung (3T).

12. Rückspiegelrahmen-Rotationssystem nach Anspruch 1
**dadurch gekennzeichnet, dass**
die Antriebsschnecke (4) hat ein trapezförmiges Motorgewinde (4T).

13. Rückspiegelrahmen-Rotationssystem nach Anspruch 1
**dadurch gekennzeichnet, dass**
das Antriebskranzrad (5) hat eine umhüllende Antriebsverzahnung (5T).

## Revendications

1. Système de rotation du cadre de rétroviseur, ayant :
1a) un moteur d'entraînement (1) ;
1b) une vis sans fin de moteur (2) dans un arbre de sortie de moteur (1) ;
1c) une couronne de moteur (3) en prise avec la vis sans fin de moteur (2) ;
1d) une vis sans fin d'entraînement (4), coaxiale à la couronne de moteur (3) ;
1e) une couronne d'entraînement (5), en prise avec la vis sans fin d'entraînement (4), configurée de sorte que le cadre du rétroviseur puisse être manoeuvré entre une position rétractée et une position déployée
**caractérisé en ce qu'**il comprend :
1f) un mécanisme anti-rebond entre le moteur (1) et la vis sans fin (2) ; composé de :
1f1) une première rondelle (11) supportée par le moteur (1) ;
1f2) une deuxième rondelle (12) supportée par la vis sans fin de moteur (2) ;
1f3) un ressort (13), entre la première rondelle (11) et la deuxième rondelle (12) ;
1f3a) configurée pour lisser la poussée axiale entre la vis sans fin de moteur (2) et la couronne de moteur (3)
et qui comprend également :
1g) un boîtier (6) configuré pour loger le moteur (1) ;
1h) un joint (7) configuré pour amortir un siège du moteur (1) dans le carter (6) il comprend en outre
1i) une plaque de support (8) :
configurée pour :
1i1) soutenir la couronne de moteur (3) et la vis sans fin d'entraînement (4) ;
1i2) positionner la couronne de moteur (3) et la vis sans fin d'entraînement (4) par rapport au moteur (1) ;
1i3) appuyer sur le carter (6) pour positionner la couronne de couronne de moteur (3), la vis sans fin d'entraînement (4) et le moteur (1) dans le boîtier (6) ;
1i4) présentant une surface de contact (8S) avec le boîtier (6), la surface de contact (8S) ayant deux extensions angulaires (8A, 8B) supérieures à 75°.

2. Système de rotation du cadre de rétroviseur, selon la revendication 1
**caractérisé en ce qu'**il comprend :
2a) une plaque de support (8) :
configurée pour :
2a1) soutenir la couronne de moteur (3) et la vis sans fin d'entraînement (4) ;
2a2) positionner la couronne de moteur (3) et la vis sans fin d'entraînement (4) par rapport au moteur (1) ;
2a3) appuyer sur le carter (6) pour positionner la couronne de couronne de moteur (3), la vis sans fin d'entraînement (4) et le moteur (1) dans le boîtier (6) ;
où :
2b) le boîtier (6) comprend une pluralité d'indentations (6R', 6R", 6R"', 6R"") en regard de la plaque (8) ;
2c) la plaque de support (8) comprend une pluralité de saillies (8P', 8P", 8P"', 8P"") conçues pour s'insérer dans les indentations (6R', 6R", 6R"', 6R"").

3. Système de rotation du cadre de rétroviseur, selon la revendication 1
**caractérisé en ce que** le système de rotation comprend :
3a) une plaque de support (8) ayant une épaisseur de plaque (8T) :
configurée pour :
3a1) soutenir la couronne de moteur (3) et la vis sans fin d'entraînement (4) ;
3a2) positionner la couronne de moteur (3) et la vis sans fin d'entraînement (4) par rapport au moteur (1) ;
3a3) appuyer sur le carter (6) pour positionner la couronne de couronne de moteur (3), la vis sans fin d'entraînement (4) et le moteur (1) dans le boîtier (6) ;
3a4) ayant une surface de contact (8S) avec le boîtier (6), la surface de contact (8S) ayant une épaisseur de support (8E) supérieure à deux fois l'épaisseur de la plaque (8T).

4. Système de rotation du cadre de rétroviseur, selon la revendication 1
**caractérisé en ce qu'il comprend** :
4a) une plaque de support (8) :
configurée pour :
4a1) soutenir la couronne de moteur (3) et la vis sans fin d'entraînement (4) ;
4a2) positionner la couronne de moteur (3) et la vis sans fin d'entraînement (4) par rapport au moteur (1) ;
4a3) appuyer sur le carter (6) pour positionner la couronne de couronne de moteur (3), la vis sans fin d'entraînement (4) et le moteur (1) dans le boîtier (6) ;
où :
4b) le boîtier (6) comprend une pluralité de rails (6C', 6C", 6C"') parallèles à un arbre moteur (1) ;
4c) la plaque de support (8) comprend une pluralité de guides (8G', 8G", 8G"') conçus pour s'insérer dans les rails (6C', 6C", 6C'").

5. Système de rotation du cadre de rétroviseur, selon la revendication 1
**caractérisé en ce qu'il comprend** :
5a) une plaque de support (8) :
configurée pour :
5a1) soutenir la couronne de moteur (3) et la vis sans fin d'entraînement (4) ;
5a2) positionner la couronne de moteur (3) et la vis sans fin d'entraînement (4) par rapport au moteur (1) ;
5a3) appuyer sur le carter (6) pour positionner la couronne de couronne de moteur (3), la vis sans fin d'entraînement (4) et le moteur (1) dans le boîtier (6) ;
où :
5b) le boîtier (6) comprend un positionneur (6P) tourné vers la plaque (8) ;
5c) la plaque de support (8) comprend un logement (8H) destiné à recevoir le positionneur (6P).

6. Système de rotation du cadre de rétroviseur, selon la revendication 1
**caractérisé en ce que** :
la couronne d'entraînement (5) est en métal.

7. Système de rotation du cadre de rétroviseur, selon la revendication 1
**caractérisé en ce que** :
la couronne d'entraînement (5) comprend un premier manchon antifriction (5B).

8. Système de rotation du cadre de rétroviseur, selon la revendication 1
**caractérisé en ce qu'il comprend** :
8a) une plaque de support (8) :
configurée pour :
8a1) soutenir la couronne de moteur (3) et la vis sans fin d'entraînement (4) ;
8a2) positionner la couronne de moteur (3) et la vis sans fin d'entraînement (4) par rapport au moteur (1) ;
8a3) appuyer sur le carter (6) pour positionner la couronne de couronne de moteur (3), la vis sans fin d'entraînement (4) et le moteur (1) dans le boîtier (6) ;
où :
8b) la couronne de moteur (3) est insérée dans un arbre d'entraînement (34) de la vis sans fin d'entraînement (4) ;
8c) un élément choisi parmi la plaque de support (8), le boîtier (6) et leurs combinaisons, comprend un siège (8C) conçu pour recevoir l'arbre d'entraînement (34).

9. Système de rotation du cadre de rétroviseur, selon la revendication 1
**caractérisé en ce que** :
le moteur (1) est enfermé de sorte que l'arbre moteur ne sorte de l'enceinte que de l'extrémité comprenant la vis sans fin (2).

10. Système de rotation du cadre de rétroviseur, selon la revendication 1
**caractérisé en ce que** :
la vis sans fin de moteur (2) a un filetage moteur trapézoïdal (2T).

11. Système de rotation du cadre de rétroviseur, selon la revendication 1
**caractérisé en ce que** :
la couronne de moteur (3) a une denture motrice enveloppante (3T).

12. Système de rotation du cadre de rétroviseur, selon la revendication 1
**caractérisé en ce que** :
la vis sans fin d'entraînement (4) a un filetage moteur trapézoïdal (4T).

13. Système de rotation du cadre de rétroviseur, selon la revendication 1
**caractérisé en ce que** :
la couronne d'entraînement (5) a une denture d'entraînement enveloppante (5T).
